Europäisches Patentamt

(19) European Patent Office

Office européen des brevets

(11) Publication number: **0 107 348**
**B1**

(12) **EUROPEAN PATENT SPECIFICATION**

(45) Date of publication of patent specification: **12.11.86**

(51) Int. Cl.⁴: **B 64 F 5/00,** B 64 D 25/10

(21) Application number: **83305639.3**

(22) Date of filing: **22.09.83**

(54) Mobile maintenance stand for servicing and transporting ejection seats.

(30) Priority: **22.10.82 US 435905**

(43) Date of publication of application:
**02.05.84 Bulletin 84/18**

(45) Publication of the grant of the patent:
**12.11.86 Bulletin 86/46**

(84) Designated Contracting States:
**GB**

(56) References cited:
**US-A-2 976 033**
**US-A-3 424 474**

(73) Proprietor: **EAST/WEST INDUSTRIES, INC.**
**22 Central Drive**
**Farmingdale New York 11735 (US)**

(72) Inventor: **Spinosa, Dominic J.**
**1766 Roland Avenue**
**Wantagh New York 11793 (US)**
Inventor: **Knoll, Frank**
**15 Candy Lane**
**Huntington Station New York 11746 (US)**

(74) Representative: **Matthews, Howard Nicholas
et al
MATTHEWS HADDAN & CO Haddan House 33
Elmfield Road
Bromley Kent BR1 1SU (GB)**

Courier Press, Leamington Spa, England.

## Description

The present invention relates to a mobile maintenance stand for servicing, maintenance and transportation of ejection seats for aircraft.

The art abounds with numerous devices that may be utilized to remove ejection seats from military or commercial aircraft. Generally these devices are cumbersome, require more than one man to operate, and are difficult to transport the ejection seat from one location to another. Different types of maintenance fixtures are required for ejection seats fabricated by different manufacturers.

The present invention overcomes the shortcomings of presently utilized devices by providing a mobile maintenance stand which is adapted to receive all known ejection seats and provides 360 degrees rotation on the horizontal axis and 270 degrees of rotation on the vertical axis, thereby enabling ground maintenance personnel to perform the required service functions with complete freedom of access. Additionally, the mobile maintenance stand may include a crane which can be utilized for the removal and replacement of aircraft canopies and ejection seats with minimal equipment or manpower. Upon removal of the ejection seat from the aircraft, the crane permits installation of the ejection seat on the mobile maintenance stand for transportation and maintenance.

In U.S. Patent No. 2976033 to Martin there is disclosed a mobile maintenance stand for servicing and transporting ejection seats including a pair of radially extending arms having a pair of wheels thereon and a third radially extending arm having a steering wheel disclosed thereon. The upright member has a single arm having a centrally disposed pivot pin which permits adjustment of the arm and permits rotation thereabout in a plurality of predetermined planes.

An object of the present invention is to provide a mobile maintenance stand of high stability which may be used for servicing and transporting ejection seats and which includes a seat height control. The invention further concerns the provision of a maintenance stand having a crane assembly mounted thereon.

In a preferred embodiment the maintenance stand is so adopted that it can provide 360 degrees rotation on the horizontal axis and 270 degrees of rotation on the vertical axis.

The stand may have manual, adjustable controls including a height control.

Preferably the stand is of lightweight material, is of rugged construction, may be quickly assembled and dismantled and can be stored in a small space.

According to the invention there is provided a mobile maintenance stand for servicing and transporting ejection seats, including a lower base portion having a plurality of radially extending arms, each of said arms being provided with rotatable means disposed proximate the distal ends thereof for providing movement along a surface for said stand, and an upper base portion rotatably affixed to said lower base portion, characterised in that said radially extending arms include respectively sway bracing means adjustably fixed to said arms to provide extensibility and additional stability, said lower base portion has removable rigidity means therefore disposed respectively proximate the distal end of said arms and said upper base portion has a pair of articulated arms disposed in an upwardly extending direction adapted to removably retain an ejection seat therebetween and means for adjusting said articulated arms to any one of a plurality of positions for performing maintenance on said ejection seat.

In order that the invention may be more fully understood, it will now be described, by way of example, with reference to the accompanying drawing in which:

Figure 1 is an isometric pictorial representation of a mobile maintenance stand, according to the principles of the present invention showing an ejection seat mounted thereon in position for servicing and/or transportation;

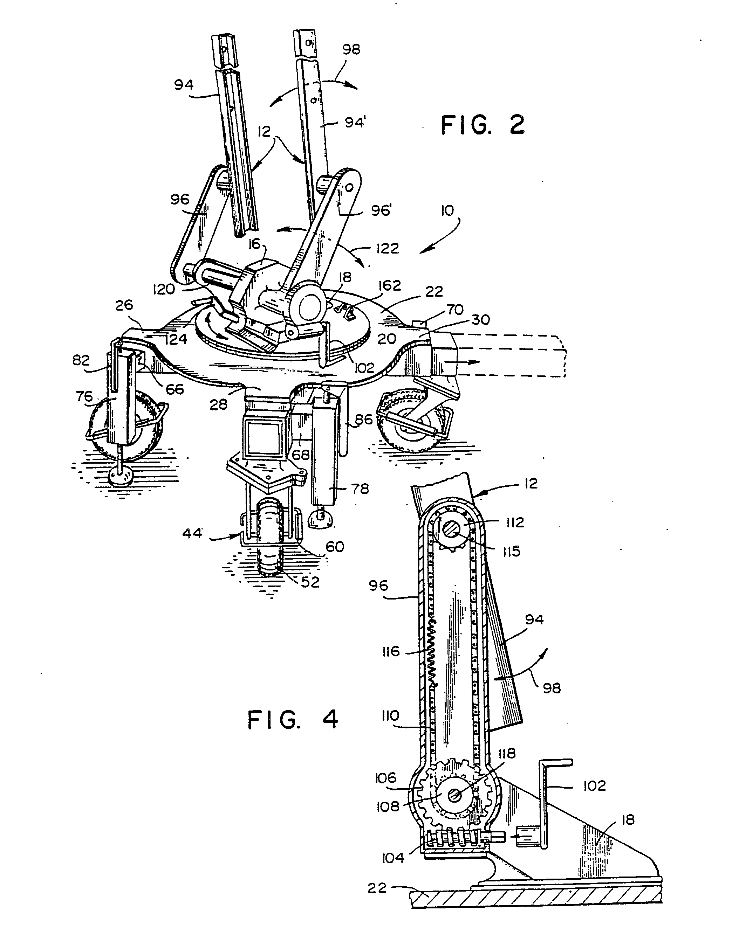

Figure 2 is an enlarged pictorial representation of the maintenance stand shown in Figure 1, showing the areas of movement of the various elements provided thereon;

Figure 3 is an enlarged pictorial representation of the driving mechanisms of the various parts of the maintenance stand shown in Figure 2;

Figure 4 is an end view, with the cover removed, of the adjustment mechanism utilized in the vertical plane;

Figure 5 shows the mobile maintenance in its collapsed or retracted position for storage or movement along a flat surface;

Figure 6 is a view taken along the line 6—6 of Figure 5;

Figures 7a, 7b, and 7c illustrate the various positions of the mobile maintenance stand when rotated for servicing of an ejection seat;

Figure 8 is a side view in elevation of a mobile maintenance stand with a crane apparatus disposed thereon in its extended position for removing an ejection seat;

Figure 9 is a side view in elevation of the apparatus shown in Figure 8 with the crane in its retracted or collapsed position showing the manner in which an ejection seat may be affixed on the maintenance stand;

Figure 10 is a partial pictorial representation of a crane apparatus and its installation dolly prior to installation on a mobile maintenance stand;

Figure 11 is an enlarged partial view of the holding mechanism provided on the extending arms of the dolly and its cooperation with the crane extending arms;

Figure 12 is a side view in elevation of the crane apparatus shown in Figures 8 and 9 illustrating the displacement of the crane from its normal vertical axis;

Figure 13 is a view taken along the line 13—13 shown in Figure 12; and

Figure 14 is an enlarged, partial view taken along the line 14—14 of Figure 13.

The subject matter which I regard as our invention is particularly pointed out and distinctly claimed in the concluding portion of this specification. The invention, however, both as to organization and method of operation, together with further objects and advantages thereof may best be understood by reference to the following description taken in connection with the accompanying drawing wherein like reference characters refer to like elements.

Description of the preferred embodiment

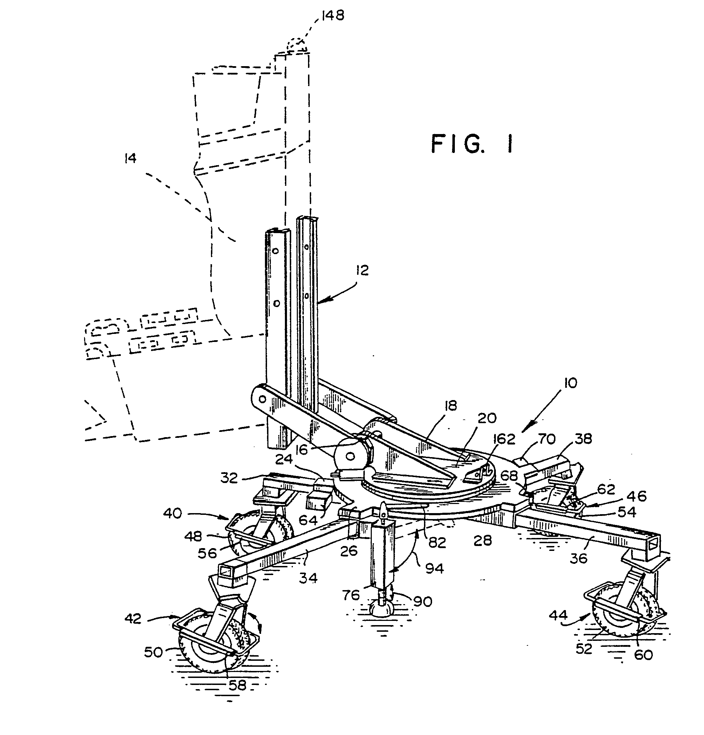

Referring now to the figures and, in particular, to Figure 1, there is shown a mobile maintenance stand 10 which has disposed between a pair of articulated arms 12 an ejection seat 14 shown in broken lines. The lower portion of the articulated arms 12 are coupled, via a gearbox mechanism 16 and bracket assembly 18 to a flat plate or upper base portion 20 which is rotatably mounted upon a lower base portion 22 and is provided with a plurality of radially extending arms 24, 26, 28, and 30.

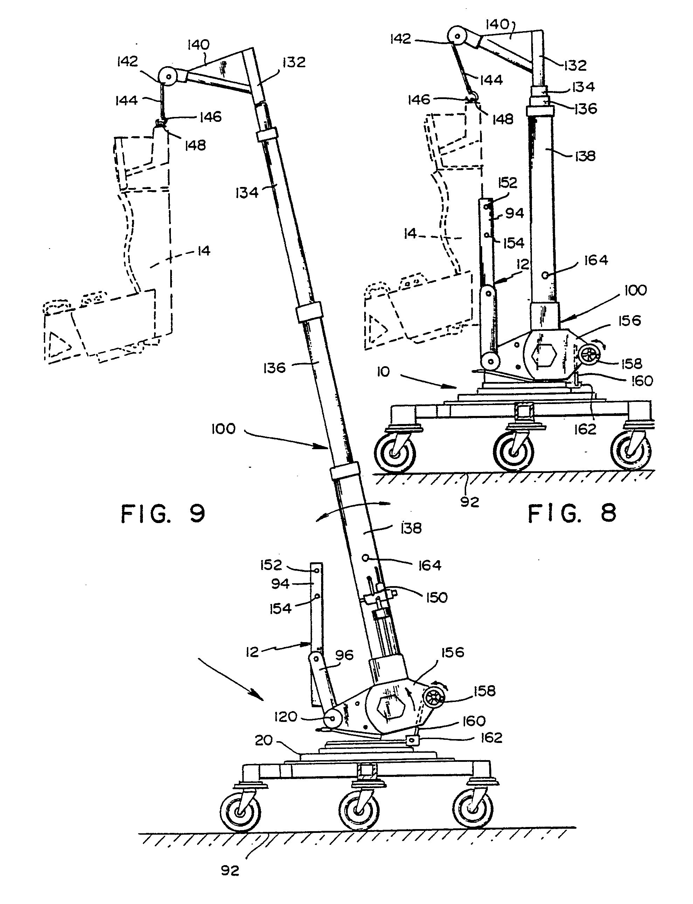

Each of the radially extending arms 24, 26, 28 and 30 are provided with a first arm section 32, 34, 36, and 38, respectively, which preferably are hollow and rectangularly-shaped when viewed in cross section. The reason for them being hollow will be explained hereinafter. The arm sections 32, 34, 36, and 38 telescope within arms 24, 26, 28, and 30, respectively, and may be extended outwardly therefrom in order to provide additional stability for the mobile maintenance stand 10. At the underside of each of the arm sections a wheel assembly 40, 42, 44, and 46 is provided. Each wheel assembly includes a pneumatic tire 48, 50, 52, and 54 and a braking mechanism 56, 58, 60 and 62 of a conventional design which may be used to inhibit the rotation of the wheels thereby preventing movement of the maintenance stand as desired. Arm sections 32, 34, 36, and 38 when fully extended provide additional bracing for the mobile maintenance stand thereby reducing any sway or instability which may be present. Additional sections may be inserted into each of the extending arm sections, as will be explained hereinafter, when the crane assembly 100 is utilized on the mobile maintenance stand as will be described in conjunction with Figures 8 and 9.

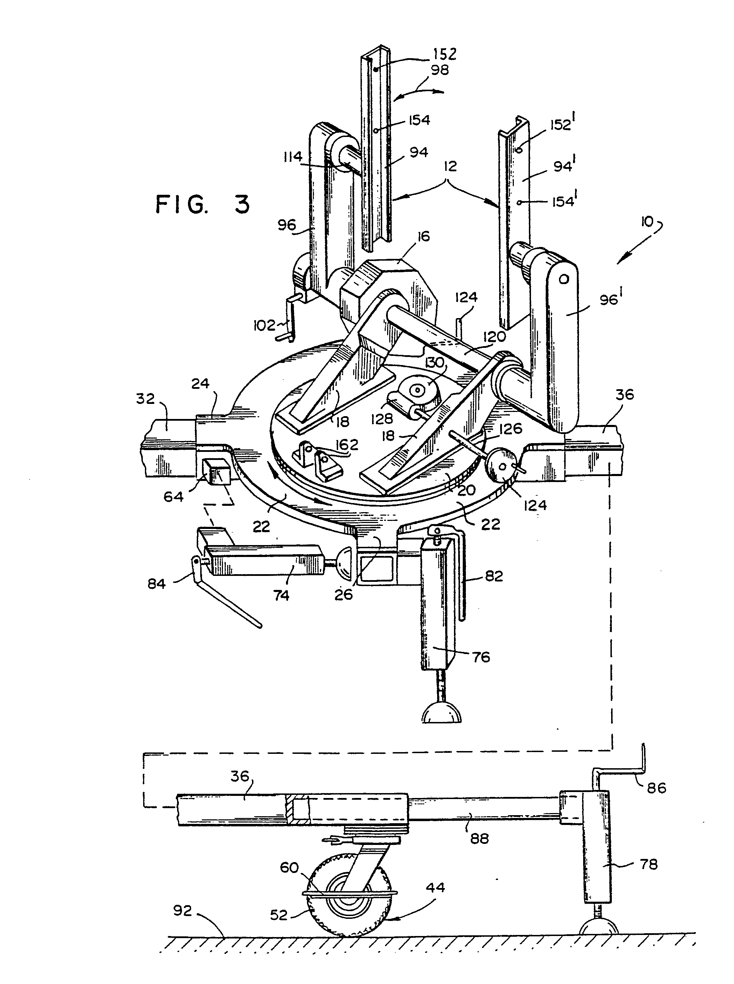

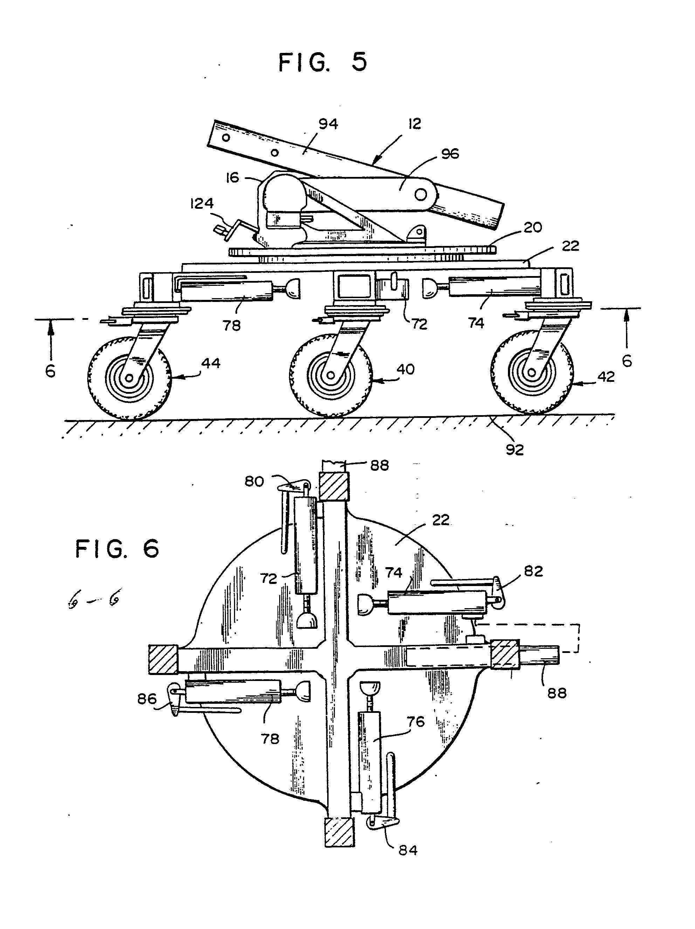

Extending in a horizontal plane transverse to each of the arms 24, 26, 28 and 30 is an outwardly extending rectangularly-shaped protruding member 64, 66, 68, and 70 which is adapted to receive and cooperate with a screw jack 72, 74, 76, and 78. The screw jacks extend, when aligned in a vertical direction, downwardly beyond the circumference of tires 48, 50, 52 and 54 when adjusted by means of crank handles 80, 82, 84 and 86 thereby providing rigid stability for the mobile maintenance stand 10. It is also possible to utilize the screw jacks 72, 74, 76 and 78 at the distal end of a second extending arm section 88 which may be utilized with each of arm sections 32, 34, 36, and 38 to further increase the stability of the mobile maintenance stand to its fully extended position when utilized together with the crane assembly 100 (see Figure 3). Rotation of the crank handles 80, 82, 84 and 86 provide adjustment in the direction of arrow 90 thereby raising the mobile platform so that the tires are not in contact with the ground or surface 92. The screw jacks 72, 74, 76 and 78 may also be removed and rotated (90 degrees) in the direction of arrow 98 and be tucked in, out of the way, permitting movement of the mobile maintenance stand along a flat surface for transportation of an ejection seat 14 mounted thereon (see Figure 6).

Referring now to Figure 3 which shows an enlarged pictorial representation of the mobile maintenance stand 10 with the first and second arm sections 32, 34, 36, 38 and sections 88, respectively, fully extended and screw jack 78 inserted on the distal end of second arm section 88 to provide a rigid stable maintenance stand and platform onto which the crane assembly 100 may be installed. The articulated arms 12 includes an upper section 94 and a lower section 96. The arm upper section 94 may be rotated in the direction of arrow 98 by the rotation of handle 102 which is removably affixed to worm gear 104. Worm gear 104 is in intimate cooperating contact with worm wheel 106 as is shown in Figure 4, and is caused to rotate as crank handle 102 rotates. The hub 108 of worm wheel 106 is provided with teeth upon which a link chain 110 is mounted. The other end of chain 110 circumscribes a chain driven gear 112 which is affixed to the axle 114 provided on the upper section 94 of the articulated arms 12 thereby providing angular rotation as indicated by the arrow 98. The chain 110 is held taut at all times by utilization of a coil spring 116 affixed to the ends of chain 110. Hub 108 of worm gear 106 is affixed on a shaft 118 that extends horizontally through axle 120 and gear box 16 to the other articulated arm 12 comprising upper section 94' and lower section 96' and, thus, both upper sections 94 and 94' of the articulated arms 12 are caused to rotate in unison. A gearbox mechanism 16 controls the movement of the lower sections 96 and 96' of articulated arms 12 in the direction of arrow 122 by the turning of crank handle 124.

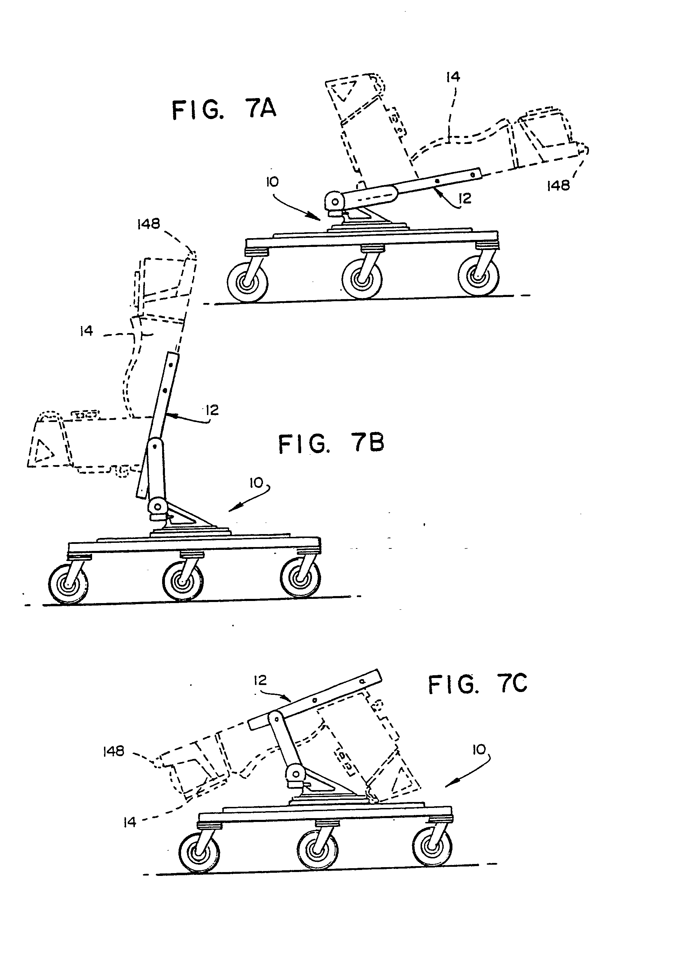

The rotation of upper base portion 20 in the horizontal plane is accomplished by the rotation of crank handle 125 which is affixed upon a driveshaft 126 having a worm gear 128 disposed thereon in intimate cooperating contact with worm wheel 130 in turn is geared to upper base portion or plate 20 in a conventional manner. Thus, rotation of crank 125 will cause the plate 20 to rotate 360 degrees in the horizontal plane taking with it the articulated arms 12 and an ejection seat which may be mounted thereon as shown in Figures 7a, 7b and 7c.

Figure 5 discloses the mobile antenna stand without the crane apparatus 100 in a collapsed or folded position for transportation and/or storage and Figure 6 shows the position of the screw jacks 72, 74, 76, and 78 in position for transportation of the mobile stand 10.

Referring now to Figures 8 and 9, there is shown a crane assembly 100 mounted on a mobile maintenance stand. Figure 8 discloses a crane assembly having 4 telescoping sections 132, 134, 136, and 138 in their fully extended position and the crane assembly 100 tilted at an angle from the vertical in order to permit the boom portion 140 of the crane assembly 100 to extend outwardly over the cockpit of an aircraft not shown. The distal, outwardly extending end 142 is provided with a pulley arrangement over which is placed a cable 144 and hook 146 affixed thereto which is adapted to engage an eye bolt 148 generally provided on the ejection seat 14. The cable 144 extends around the end pulley 142 and through the telescoping sections 132, 134, 136, and 138 of crane assembly 100 where it is affixed to a conventional ratcheted raising and lowering mechanism 150 which may be either manually operated or motor driven. The hook 146 is connected to the eye bolt 148 while the ejection seat 14 is positioned in an aircraft, not shown. Once the ejection seat 14 is released from the aircraft by removal of the retaining bolts, the crane operator may lift the seat out of the cockpit away from the aircraft and lower it until the seat is received between the articulated arms 12 provided on the mobile maintenance stand as shown in Figure 9. The apertures 152 and 154 provided in the upper section 94 of the articulated arms 12 permit the use of retaining devices, (e.g. bolts), not shown, similar to that utilized to affix the ejection seat 14 in the airplane's cockpit. The hook 146 may then be removed from eye bolt 148 and the crane assembly 100 removed from the maintenance stand 10 permitting rotation of the ejection seat 14 so that the maintenance thereon may be performed by a maintenance mechanic. Positioning of the ejection seat 14 may be accomplished as shown in Figure 7a, 7b and 7c.

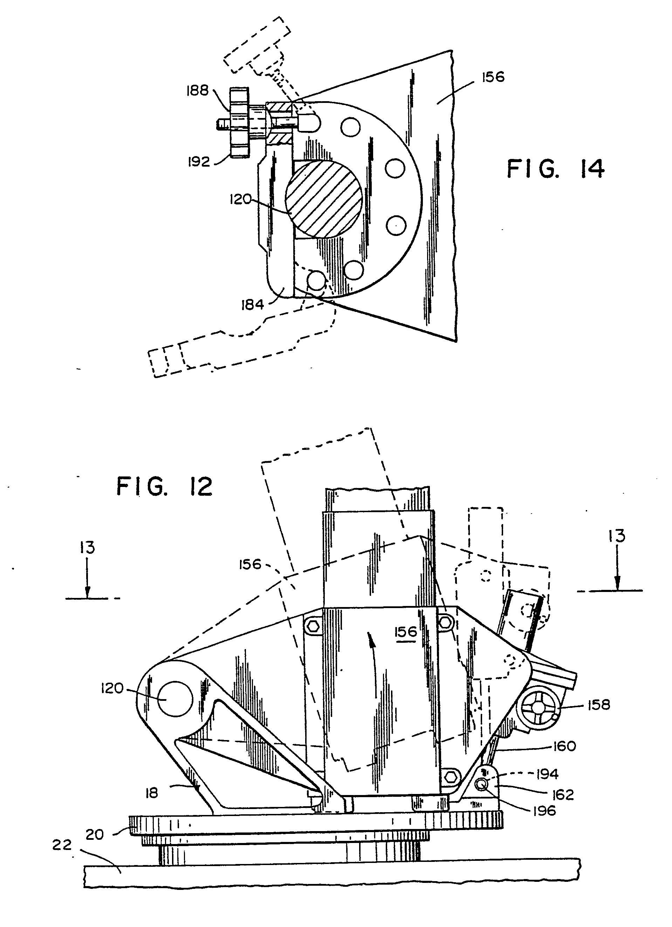

The lower portion 156 of the crane assembly 100 includes a handle 158 affixed on a shaft and gearing mechanism, not shown, which permits for the tilting of the crane assembly 100 off its normal vertical alignment. By turning crank handle 158 and extending screw member 160 is caused to exert pressure against the retaining bracket 162 thereby tilting the crane assembly 100 away from the vertical position. This is accomplished by rotating the crane assembly 100 about its pivotal axis 120 which is more clearly seen by referring to Figure 12.

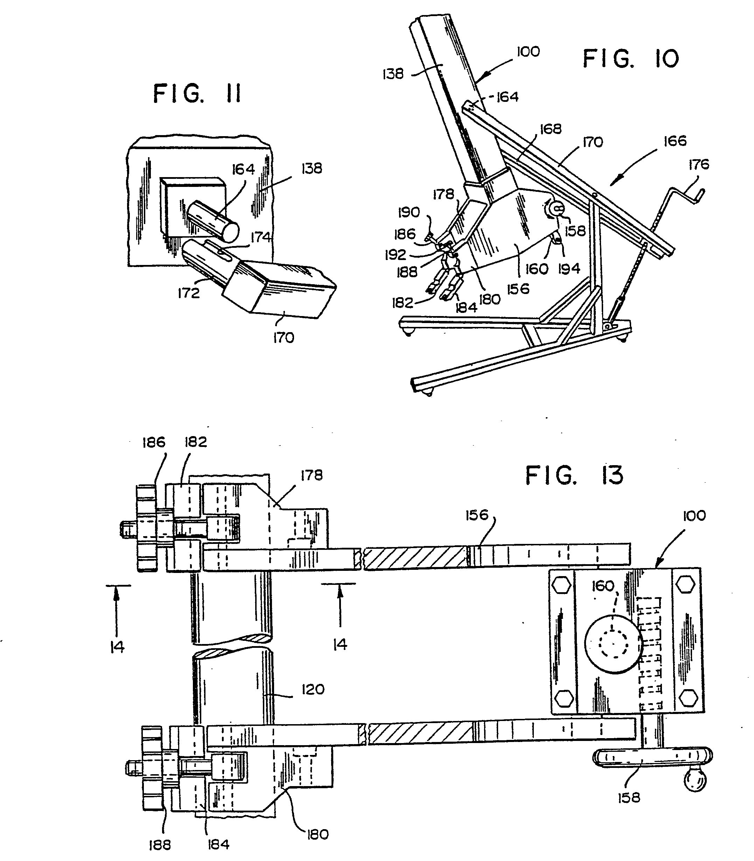

Referring now to Figures 10, 11, 12, 13 and 14, there is shown the detailed construction of the crane assembly 100, more specifically the lower portion 156 thereof and its mounting upon the mobile maintenance stand 10. The lowest section 138 of the crane assembly 100 is provided with a pair of pivotal arms 164 which extend outwardly from section 138 and at right angles to both the longitudinal and transverse axis thereof. Its position is chosen to be slightly at or above the center gravity of the crane assembly when the sections 132, 134, and 136 are in their fully collapsed position and within section 138. A dolly 166 having extending arms 168 and 170 is provided with an inwardly extending holding member 172 that contains a generally semi-circularly shaped depression 174 adapted to loosely receive pivotal arms 164 therein. Thus, the crane assembly may be stored in either the horizontal or vertical position when removed from the mobile maintenance stand 10 and the arms 168 and 170 may be positioned to receive the pivotal arms 164. Turning of crank handle 176 of dolly 166 will permit the arms 168 and 170 to raise the crane assembly 100 from its resting position and by virtue of the pivotal arms being at or above the center of gravity of the crane assembly will cause the lower portion 156 to move slowly to a downward position as shown in Figure 10. The forward arms 178 and 180 of the lower portion 150 of the crane assembly 100 are provided with latching swing arms 182 and 184 and locking mechanisms 186 and 188 of conventional design.

In order to place the crane assembly 100 onto the maintenance stand 10, it is necessary to move the dolly in close proximity with the stand 10 so that the arms 178 and 180 are brought proximate to the axle 120 on the maintenance stand 10. Latching swing arms 182 and 184 are brought beneath axle 120 and raised therearound where they are in position by locking mechanisms 186 and 188 by merely turning the threaded knobs 190 and 192 provided thereon until the swing arms 182 and 184 are firmly retained in position. The extending eye 194 provided in screw member 160 is placed within retaining bracket 162 and a removable pin 196 is placed in the aligning aperture provided in bracket 162 thereby retaining the crane assembly in position on the mobile maintenance stand. If the crane member 100 is to be removed from the stand, this procedure is reversed.

In operation, the crane assembly 100 is affixed to the mobile maintenance stand as described hereinbefore. The crane is fully extended and the mobile maintenance stand and crane apparatus is moved towards the aircraft from which the ejection seat 14 is to be removed. After connection of the hook 146 to the eye bolt 148 provided on the ejection seat, the ejection seat is released from the aircraft and the crane is then utilized to remove the seat therefrom. Once the seat is free and clear of the aircraft, it is lowered into position where it may be retained by the articulated arms provided on the maintenance stand. The hook 146 is then removed from the ejection seat 14 and the crane retracted to its collapsed position. The dolly 166 is then brought close to the maintenance stand so that the arms 168 and 170 thereof can permit holding mechanism 172 to come into contact with pivotal arms 164. Pin 196 is then removed from eye 194 of the screw member 160 and the latching swing arms 182 and 184 is released so that the dolly may now raise the crane assembly 100 away from the mobile maintenance stand 10 and separate the two members. Maintenance technicians are then free to position the ejection seat 14 in any manner suitable for performing their tasks.

Hereinbefore has been disclosed a mobile maintenance stand and crane apparatus which is lightweight, transportable, and utilizable in the field with a minimum of manpower. It will be understood that various changes in the details, materials, arrangements of parts and operating conditions which have been herein described and illustrated in order to explain the nature of the invention may be made by those skilled in the art within the scope of the following claims.

## Claims

1. A mobile maintenance stand for servicing and transporting ejection seats, including a lower base portion (22) having a plurality of radially extending arms (24, 26, 28, 30), each of said arms being provided with rotatable means (40, 42, 44, 46) disposed proximate the distal ends thereof for providing movement along a surface for said stand, and an upper base portion (20) rotatably affixed to said lower base portion, characterized in that said radially extending arms (24, 26, 28, 30) include respectively sway bracing means (32, 34, 36, 38) adjustably fixed to said arms to provide extensibility and additional stability, said lower base portion (22) has removable rigidity means (72, 74, 76, 78) therefor disposed respectively proximate the distal end of said arms (24, 26, 28, 30), and said upper base portion has a pair of articulated arms (12) disposed in an upwardly extending direction adapted to removably retain an ejection seat therebetween and means (16) for adjusting said articulated arms to any one of a plurality of positions for performing maintenance on said ejection seat.

2. A mobile maintenance stand according to Claim 1, characterized in that said radially extending arms (24, 26, 28, 30) comprise a first portion each having a hollow rectangular cross-section and a second portion in the form of said sway bracing means (32, 34, 36, 38), the underside of the distal ends of each said sway bracing means being provided with said rotatable means, the distal ends of said first portion being adapted to receive said removable ridigity means (72, 74, 76, 78).

3. A mobile maintenance stand according to Claim 2, characterized in that said removable rigidity means (72, 74, 76, 78) includes an adjustable screw jack.

4. A mobile maintenance stand according to Claim 1, 2 or 3, characterised in that each of said arms is provided with means (64, 66, 68, 70) for storing said rigidity means (72, 74, 76, 78) during movement of said maintenance stand across a surface.

5. A mobile maintenance stand according to any one of Claims 1—4, characterized in that saud upper base portion (20) is rotatable 360 degrees in a horizontal plane and said articulated arms (12) permit rotation of said ejection seat for at least 270 degrees in a vertical plane.

6. A mobile maintenance stand according to any one of Claims 1—5, characterized in that said upper base portion (20) is provided with a telescoping crane assembly comprising
a) a lower portion having means disposed thereon for removable attachment to said upper base portion; and
b) an extending boom and means (144, 146, 148) for removably connecting, raising and lowering said ejection seats, said means for raising and lowering being controlled from a control means (158, 160) disposed upon said upper base portion.

7. A mobile maintenance stand according to any one of Claims 1—6, characterized in that said upper base portion (20) includes a horizontally disposed plate member rotatably affixed to said lower portion, said upper base portion including a pair of vertically disposed brackets (18) having a horizontally disposed axle (120) rotatably disposed therein, said axle serving to carry at its distal ends said articulated arms (12), said articulated arms having upper arm sections (94) rotatably affixed to said pair of articulated arms adapted to receive said ejection seat therebetween.

8. A mobile maintenance stand according to Claim 7, characterized in that means (104, 106, 108, 110, 112, 115, 118) are provided to adjust the angle between the upper arm sections (94) and the articulated arms (12).

9. A mobile maintenance stand according to Claim 6, characterized in that dolly means are included for removing and installing said crane assembly from said upper base portion.

## Patentansprüche

1. Mobiler Wartungsstand für den Service und den Transport von Schleudersitzen
mit einem unteren Basisteil (22) mit mehreren radial varlaufenden Armen (24, 26, 28, 30), die jeweils an ihren äußeren Enden Fahrmittel (40, 42, 44, 46) aufweisen, mit deren Hilfe der Wartungsstand über eine Bodenfläche bewegbar ist,
sowie mit einem oberen Basisteil (20), das an dem unteren Basisteil drehbar befestigt ist,
dadurch gekennzeichnet,
daß die radial verlaufenden Arme (24, 26, 28, 30) jeweils Verstrebungsmittel (32, 34, 36, 38) umfassen, die einstellbar an den Armen fixiert sind und Ausziehbarkeit und zusätzliche Stabilität ermöglichen,
daß das untere Basisteil (22) lösbare Feststellmittel (72, 74, 76, 78) besitzt, die in der Nähe der äußeren Enden der genannten Arme (24, 26, 28, 30) angeordnet sind,
und daß das obere Basisteil zwei nach oben ragende Gelenkarme (12) aufweist, zwischen denen ein Schleudersitz lösbar gehalten werden kann, sowie Mittel (16) zur Einstellung dieser Gelenkarme in eine von mehreren Positionen zur Durchfürrung von Wartungsarbeiten an dem Schleudersitz.

2. Mobiler Wartungsstand nach Anspruch 1, dadurch gekennzeichnet, daß die radial verlaufenden Arme (24, 26, 28, 30) jeweils einen ersten Abschnitt mit einem rechteckigen Hohlprofil besitzen sowie einen zweiten Abschnitt in Form der genannten Verstrebungsmittel (32, 34, 36, 38), daß die Fahrmittel an den aüßeren Enden der Verstrebungsmittel (32, 34, 36, 38) angeordnet sind, und daß an den aüßeren Enden der ersten Abschnitte der Arme Mittel zur Aufnahme der genannten lösbaren Feststellmittel (72, 74, 76, 78) vorgesehen sind.

3. Mobiler Wartungsstand nach Anspruch 2, dadurch gekennzeichnet, daß die Feststellmittel (72, 74, 76, 78) eine verstellbare Hebespindel beinhalten.

4. Mobiler Wartungsstand nach Anspruch 1, 2 oder 3, dadurch gekennzeichnet, daß an jedem der genannten Arme Mittel (64, 66, 68, 70) vorgesehen sind, die ein Verstauen der Feststellmittel (72, 74, 76, 78) während der Bewegung der Wartungsstands über eine Bodenfläche ermöglichen.

5. Mobiler Wartungsstand nach einem der Ansprüche 1 bis 4, dadurch gekennzeichnet, daß das obere Basisteil in einer horizontalen Ebene um 360° drehbar ist und daß die Gelenkarme (12) eine Drehung des Schleudersitzes um wenigstens 270° in einer vertikalen Ebene ermöglichen.

6. Mobiler Wartungsstand nach einem der Ansprüche 1 bis 5, dadurch gekennzeichnet, daß das obere Basisteil (20) mit einer Teleskopkraneinrichtung ausgestattet ist, die

a) einen unteren Bereich mit Mitteln zur lösbaren Befestigung an dem oberen Basisteil sowie
b) einen Ausleger und Mittel (144, 146, 148) zum lösbaren Verbinden, zum Anheben und zum Absenken des Schleudersitzes
umfaßt,

wobei die Mittel zum Anheben und Absenken durch eine Steuereinrichtung (158) betätigbar sind, die unter dem oberen Basisteil angeordnet sind.

7. Mobiler Wartungsstand nach einem der Ansprüche 1 bis 6, dadurch gekennzeichnet, daß das obere Basisteil (20) eine horizontal angeordnete Platte umfaßt, die drehbar an dem unteren Basisteil befestigt ist, daß das obere Basisteil ferner zwei vertikal angeordnete Bügel (18) mit einer drehbar an ihnen angeordneten horizontalen Achse (120) umfaßt, daß diese Achse an ihren aüßeren Enden die genannten Gelenkarme (12) trägt, und daß die Gelenkarme obere Armabschnitte (94) besitzen, die drehbar an ihnen befestigt sind und die zwischen sich den Schleudersitz aufnehmen können.

8. Mobiler Wartungsstand nach Anspruch 7, dadurch gekennzeichnet, daß Mittel (104, 106, 108, 110, 112, 115, 118) zur Einstellung des Winkels zwischen den oberen Armabschnitten (94) und den Gelenkarmen (12) vorgesehen sind.

9. Mobiler Wartungsstand nach Anspruch 6, dadurch gekennzeichnet, daß er ein Hebezeug zum Entfernen und Installieren der Kranseinrichtung von dem bzw. an dem oberen Basisteil umfaßt.

**Revendications**

1. Un support mobile pour l'entretien et le transport de sièges éjectables, comportant une partie inférieure de socle (22) présentant une pluralité de bras radiaux (24, 26, 28, 30), chacun desdits bras étant muni de moyens tournants (40, 42, 44, 46) disposés au voisinage des extrémités distales de ceux-ci pour permettre un mouvement le long d'une surface dudit support, et une partie supérieure de socle (20) assujettie de manière tournante à ladite partie inférieure de socle, caractérisé en ce que lesdits bras radiaux (24, 26, 28, 30) comportent respectivement des moyens de contreventement (32, 34, 36, 38) assujettis de manière réglable auxdits bras pour permettre une extensibilité et une stabilité additionnelle, ladite partie inférieure de socle (22) comporte des moyens amovibles de rigidité (72, 74, 76, 78) disposés respectivement au voisinage des extrémités distales desdits bras (24, 26, 28, 30), et ladite partie supérieure de socle présente une paire de bras articulés (12) disposés dans une direction s'étendant vers le haut de manière à pouvoir supporter entre eux de manière amovible un siège éjectable, et des moyens (16) pour régler lesdits bras articulés sur l'une quelconque d'une pluralité de positions pour l'exécution des opérations d'entretien sur ledit siège éjectable.

2. Un support mobile pour l'entretien selon la revendication 1, caractérisé en ce que lesdits bras radiaux (24, 26, 28, 30) comportent une première partie qui présente une section droite rectangulaire creuse et une seconde partie sous la forme desdits moyens de contreventement (32, 34, 36, 38), la face inférieure des extrémités distales de chacun desdits moyens de contreventement étant équipée de moyens tournants, les extrémités distales de ladite première partie étant agencées pour recevoir lesdits moyens amovibles de rigidité (72, 74, 76, 78).

3. Un support mobile pour l'entretien selon la revendication 2, caractérisé en ce que lesdits moyens amovibles de rigidité (72, 74, 76, 78) comportent un vérin réglable à vis.

4. Un support mobile pour l'entretien selon la revendication 1, 2 ou 3, caractérisé en ce que chacun desdits bras comporte des moyens (64, 66, 68, 70) pour recevoir lesdits moyens de rigidité (72, 74, 76, 78) pendant le déplacement dudit support d'entretien le long d'une surface.

5. Un support mobile pour l'entretien selon l'une quelconque des revendications 1 à 4, caractérisé en ce que ladite partie supérieure de socle (20) peut tourner sur 360 degrés dans un plan horizontal et lesdits bras articulés (12) permettent la rotation dudit siège éjectable sur au moins 270 degrés dans un plan vertical.

6. Un support mobile pour l'entretien selon l'une quelconque des revendications 1 à 5, caractérisé en ce que ladite partie supérieure de socle (20) est équipée d'un ensemble télescopique de levage comportant

a) une partie inférieure présentant des moyens qui sont placés sur elle pour le montage amovible sur ladite partie supérieure de socle; et

b) des moyens (144, 146, 148) à l'extrémité d'une flèche déployable pour la liaison amovible avec ledit siège éjectable et pour soulever et abaisser ledit siège, lesdits moyens de soulèvement et d'abaissement étant commandés à partir de moyens de commande (158, 160) disposés sur ladite partie supérieure de socle.

7. Un support mobile pour l'entretien selon l'une quelconque des revendications 1 à 6, caractérisé en ce que ladite partie supérieure de socle (20) comporte un élément horizontal en forme de plaque qui est assujetti de manière tournante à ladite partie inférieure de socle, ladite partie supérieure de socle comportant une paire de supports verticaux (18) présentant un axe horizontal (120) reçu de manière rotative dans lesdits supports, ledit axe servant à supporter, à ses extrémités distales, lesdits bras articulés (12), lesdits bras articulés présentant des parties supérieures de bras (94) assujetties de manière tournante à ladite paire de bras articulés agencés pour recevoir entre eux ledit siège éjectable.

8. Un support mobile pour l'entretien selon la revendication 7, caractérisé en ce que des moyens (104, 106, 108, 110, 112, 115, 118) sont prévus pour régler l'angle entre les parties supérieures de bras (94) et les bras articulés (12).

9. Un support mobile pour l'entretien selon la revendication 6, caractérisé en ce que des moyens de support sont prévus pour enlever ou mettre en place ledit ensemble de levage par rapport à ladite partie supérieure de socle.

FIG. 1

FIG. 2

FIG. 4

FIG. 3

# FIG. 5

# FIG. 6

6 – 6

FIG. 7A

FIG. 7B

FIG. 7C

FIG. 9

FIG. 8

FIG. 11

FIG. 10

FIG. 13

FIG. 14

188

192

120

184

156

FIG. 12

13

156

156

120

158

160

194

18

162

196

20

22

8